# EUROPEAN PATENT SPECIFICATION

(11) **EP 0 317 093 B1**
(45) Date of publication and mention of the grant of the patent: **27.01.1993**
(21) Application number: 88310041.4
(22) Date of filing: 26.10.1988
(51) Int. Cl.: F02M 35/16, B60K 13/02

(54) **Air intake system adapted for motor bicycle engine**
Für einen Motorradmotor angepasstes Lufteinlasssystem
Système d'aspiration d'air adapté pour un moteur d'une motocyclette

(30) Priority: 27.10.1987 JP 270579/87; 28.10.1987 JP 272809/87; 03.12.1987 JP 304567/87; 12.02.1988 JP 28973/88
(43) Date of publication of application: 24.05.1989
(60) Divisional application: 91200937.0
(73) Proprietor: SUZUKI KABUSHIKI KAISHA, Shizuoka-Ken (JP)
(72) Inventor: Inaba, Ryuichi, Hamamatsu-Shi Shizuoka-Ken (JP); Nagayoshi, Michio, Hamamatsu-Shi Shizuoka-Ken (JP); Urabe, Atsuo, Hamamatsu-Shi Shizuoka-Ken (JP); Nitta, Yutaka, Kosai-Shi Shizuoka-Ken (JP)
(74) Representative: Dealtry, Brian

(56) References cited:
- CH-A- 305 926
- DE-A- 3 701 736
- GB-A- 2 088 800
- US-A- 4 066 291

## Description

This invention relates to a motor cycle and more particularly to an air intake system and members associated therewith for an engine of the motor cycle adapted for supply air to the engine.

A motor cycle is equipped with an engine within a frame member which generally has an inversed trapezoidal shape and to which is operatively connected an air cleaner for removing foreign materials such as dirt or dust in the air. The thus cleaned air is guided in a carburetor through an intake tube, and the air introduced into the carburetor is then mixed therein with a fuel, the mixture being supplied to the engine for combustion.

With a motor cycle equipped with a two-cycle multiple cylinder engine, a plurality of carburetors are respectively provided for the cylinders. However, in a case where the respective carburetors are mounted at angles different from each other, the carburetors are connected to a single air cleaner through intake tubes having different lengths respectively or to a plurality of air cleaners through intake tubes having the same lengths. These designs of the conventional technique provide various problems as follows.

In the former design, the difference of the angles of mounting of the respective carburetors are solved by interposing, for connection, the intake tubes having different lengths, but the difference of the length of the intake tubes causes the difference of the pulsation of the air in the respective intake tubes with respect to the corresponding cylinders, resulting in the unbalance of the intake air in the respective cylinders and hence in the degradation of the engine performance. In the latter design, although the intake tubes having the same length can be used, it is obliged to use a plurality of air cleaners, so that it is difficult to ensure sufficient capacity of the air cleaner for the respective one cylinder, thus degrading the engine performance.

JP-A-60227039 does disclose an arrangement where the intake tubes are of equal length, the carburetors disposed at different angles and the air cleaner is constructed to have a shape adapted to compensate for the variation in carburetor attachment angle. In such arrangements combustion takes place at irregular time intervals and thus long and short intake intervals occurs between the respective cylinders. Therefore, an intake interval of one cylinder starts on or before the finish of the intake operation of another. This results in a reduction of the pressure in the cleaner which reduces engine output.

### SUMMARY OF THE INVENTION

An object of this invention is to substantially eliminate the defects or drawbacks encountered to the conventional technique described above and to provide an air intake system for a motor cycle engine capable of stabilizing air pulsations in the respective intake tubes connecting an air cylinder and carburetors, maintaining the suction air balance between the respective cylinders for the engine and ensuring a sufficient inner volume of the air cleaner for the respective cylinders.

Another object of this invention is to provide an air cleaner of an air intake system adapted for a motor cycle engine capable of preventing the interference of suction air between the respective cylinders, thereby improving air intake efficiency and engine output performance.

These and other objects can be achieved according to this invention by providing an air intake system adapted for a motor cycle engine unit including a plurality of cylinders and an air cleaner for removing a foreign material such as dust contained in an intake air, in which a plurality of intake tubes are connected to the air cleaner for feeding clean air from the air cleaner and a plurality of carburetors are connected to the intake tubes respectively in which the clean air is mixed with a fuel, said carburetors being connected at angles different from each other with respect to a central axis of said air cleaner, the air fuel mixture being fed to the engine unit, the intake tubes having lengths substantially equal to each other said carburetors having substantially the same outer configuration and said air cleaner is provided with an air cleaner body which is divided into a dust side chamber and a clean side chamber by means of a filter the air cleaner being constructed to have a shape for absorbing the difference of the attachment angles of said carburetors and characterized in that, said clean side chamber is divided into a plurality of clean side sections by a partition member so as to have inner volumes substantially equal to each other and said clean side sections are connected respectively to corresponding cylinders for the engine unit through the intake tubes and the carburetors.

The length of each of the intake tubes are arranged to be the same length. Therefore, air pulsation in the intake tube can be made the same between cylinders so that suction air balance can be secured between cylinders. Furthermore, sufficient capacity of the air cleaner for each cylinder can be ensured, thus improving the engine performance. Since the clean side chamber of the air cleaner is divided into a plurality of sections having the substantially same capacity, and each of the clean side sections is connected to each of the cylinders, occurrence of interference of suction air between each of the cylinders can be prevented even if in a multi-cylinder engine where suction processes are in part overlapped to each other. Furthermore, since the capacity of each of the clean side sections are substantially the same, air intake performance of each of the cylinders can be made substantially the same. Therefore, the engine output can be improved.

The preferred embodiments according to this invention will be described further in detail hereunder with reference to the accompanying drawings.

### BRIEF DESCRIPTION OF THE DRAWINGS

In the accompanying drawings:
Fig. 1 is a side-elevational view illustrating a motor cycle equipped with an air intake device for motor cycle according to this invention;
Fig. 2 is a side-elevational view of the above embodiment;
Fig. 3 illustrates the structure of an air cleaner to be mounted to the above embodiment;
Fig. 4 illustrates the internal structure of the air cleaner incorporated in the air intake system of this invention;
Fig. 5 is a vertical sectional cross-sectional view of the embodiment shown in Fig. 4;
Fig. 6 illustrates the structure of an example of a conventional air intake device;
Fig. 7 illustrates the structure of an example of the conventional air intake device;

### DESCRIPTION OF THE PREFERRED EMBODIMENTS

Beforehand the description of the preferred embodiments according to this invention conventional techniques as the background of this invention will be described hereunder with reference to illustrated examples of drawings for the better understanding of this invention.

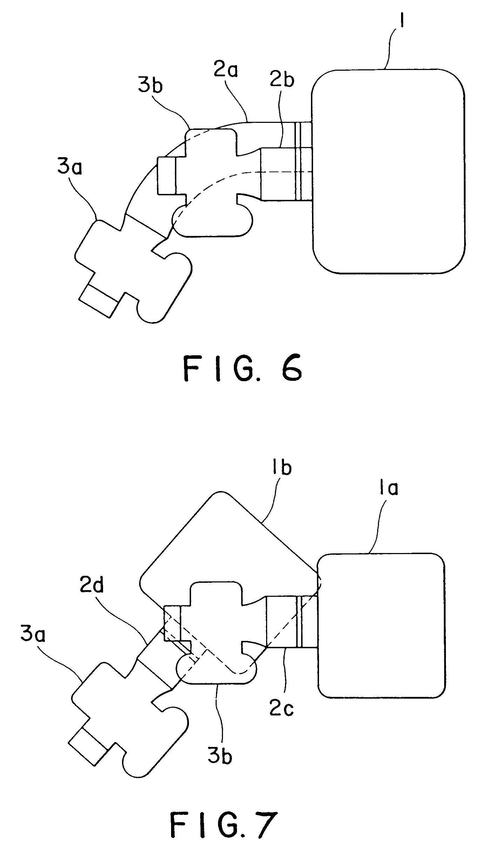

Figs. 6 and 7 represent two layout methods in which carburetors are mounted at angles different from each other.

That is, in a case of the type shown in Fig. 6 intake tubes 2a and 2b each having different length are connected to the same air cleaner 1 so that the difference in the angle at which each of the carburetors 3a and 3b is absorbed by the difference in length between the intake tubes 2a and 2b. On the other hand, in the case of the type shown in Fig. 7, two air cleaners 1a and 1b are provided, and intake tubes 2c and 2d in the form of the same shape are connected to the corresponding air cleaners 1a and 1b. The difference in the angle at which each of the carburetors 3a and 3b are mounted is absorbed by layout of each of the air cleaners 1a and 1b.

However, in the case shown in Fig. 6, since the length of the intake tube 2a and that of 2b are different, air pulsations generated in the intake tubes 2a and 2b are different between cylinders. Therefore, unbalance of the suction air occurs between cylinders, causing for the engine performance to be deteriorated. In the case shown in Fig. 7, although intake tubes 2c and 2d of the same shape can be used, a sufficient capacity for each cylinder cannot be secured since two air cleaners 1a and 1b are used. As a result of this, engine performance is deteriorated.

One preferred embodiment of this invention was conceived by taking the above conventional technique and defects or drawbacks encountered thereto, which will be described hereunder.

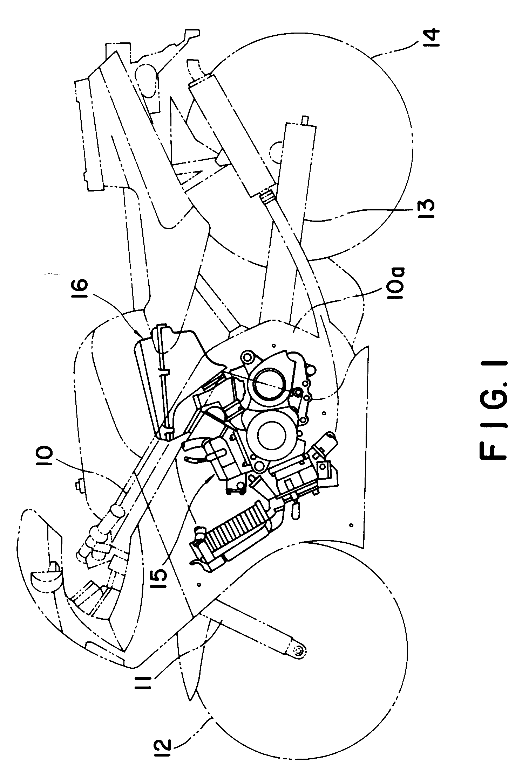

Fig. 1 is a side-elevational view of a motor cycle equipped with an air intake device according to an embodiment of this invention. In Fig. 1, a head pipe is provided at the front end portion of a frame 10, and a front fork 11 to be connected to the head pipe supports a front wheel 12 whereby it can be freely rotated. At the rear end portion of a swing arm 13 extending over a pivot portion 10a of the frame 10, a rear wheel 14 is supported so as to be rotated freely.

The rear wheel 14 is, by means of an engine 15 to be mounted at the central portion of the cycle body, rotated via a chain which is omitted from illustration. The engine 15 is, via a bracket which is omitted from illustration, secured to the frame 10. The engine 15 comprises, for example, a V-type two-cylinder two-cycle engine and is provided with an air intake device 16 which acts to supply suction air to each cylinder.

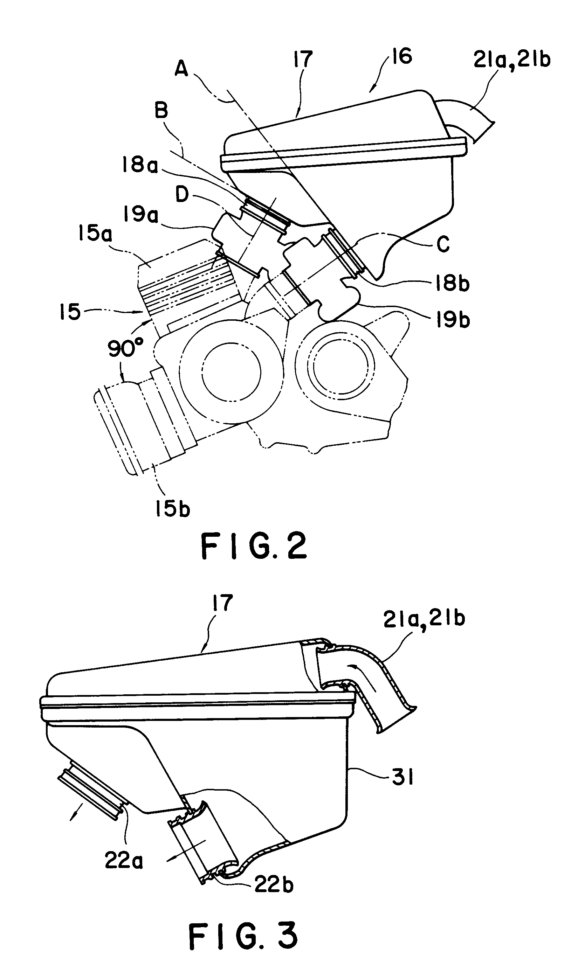

An air intake device 16 comprises, as shown in Fig. 2, an air cleaner 17 for removing foreign matters such as dust in air, two intake tubes 18a and 18b for guiding fresh air from the air cleaner 17, and two carburetors 19a and 19b for mixing the thus-guided air by these intake tubes 18a and 18b with fuel and for supplying it to the engine 15.

Each of the intake tubes 18a and 18b is connected to one air cleaner 17 and are formed in the same length. The engine 15 comprises two cylinders and the angle at which each of the carburetors 19a and 19b is mounted is different from each other.

The air cleaner 17 accommodates, as shown in Fig. 3, a filter element which is omitted from illustration and which acts to remove foreign matters in a main chamber body 31 thereof. Two inlet tubes 21a and 21b are provided in the rear portion of the main chamber body 31, and two outlet tubes 22a and 22b are provided adjacent to the engine 15.

The air cleaner 17 is in the form such that difference in the angle at which the carburetors 19a and 19b are mounted can be absorbed.

That is, in this embodiment, the shape of the air cleaner 17 is formed such that the surfaces A and B of the air cleaner 17 to which the carburetors are mounted and the center axes C and D of each of the carburetors 19a and 19b are intersected perpendicularly.

According to this embodiment, since the air cleaner 17 is in the form of a shape whereby the difference in the angle at which the carburetors 19a and 19b are mounted can be absorbed, the length of the intake tube 18a and that of 18b can be made the same length for each of the cylinders. Therefore, the air pulsation in each of the intake tubes 18a and 18b can be made the same so that the suction air balance between the cylinders can be maintained. Furthermore, since only one air cleaner 17 needs to be provided, a large capacity air cleaner 17 can be mounted so that sufficient air cleaner capacity for each cylinder can be secured. Therefore, engine performance can be improved.

Furthermore, since only one air cleaner 17 needs to be provided, and only one type of the intake tubes 18a and 18b and only one type of the carburetors 19a and 19b need to be provided, the structure can be simplified and manufacturing cost can be kept low.

In another aspect of this invention, a preferred embodiment will be described hereunder with respect to the prevention of the interference of suction air between the respective cylinders of a V-type two-cylinder two-cycle engine, for example.

The engine 15 is, as shown in Fig. 2, comprises a V-type two-cylinder two-cycle engine. A first cylinder 15a and a second cylinder 15b are disposed at an angle of 90°. An air intake device 17 for supplying suction air to each of the cylinders 15a and 15b is connected to the engine 15.

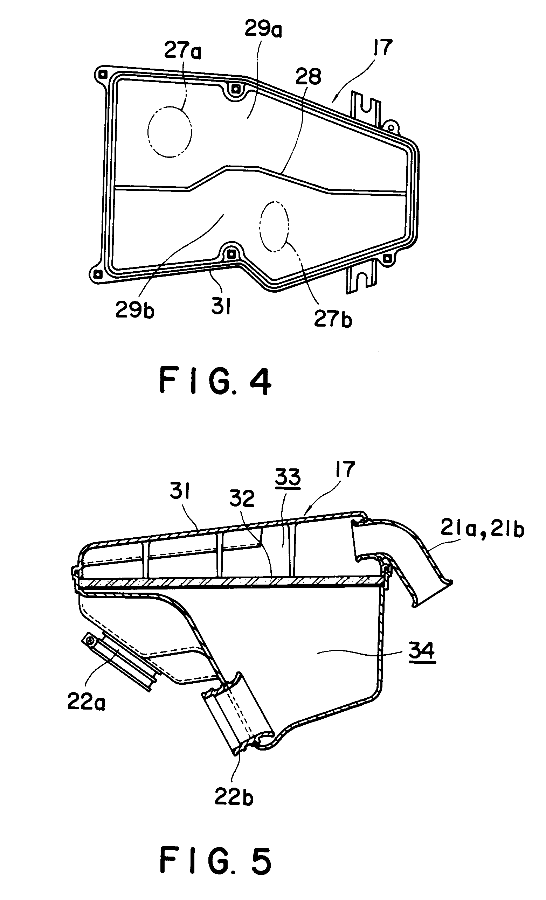

The air cleaner 17 is, as shown in Figs. 4 and 5, arranged in such a manner that the inside portion of a cleaner body 31 thereof is divided into a dust side 33 and a clean side 34 by a filter 32, and two inlet tubes 21a and 21b are connected to the dust side 33, while a pair of outlet tubes 22a and 22b is connected to the clean side 34.

The cleaner body 31 is, as shown in Fig. 2, formed so as to absorb the difference in the angle at which the carburetors 19a and 19b are mounted. That is, the shape of the cleaner body 21 is formed in such a manner that the surfaces A and B of the cleaner body 21 on which the carburetors are respectively mounted and the center axes C and D of each of the carburetors 19a and 19b are penetrated to each other. Therefore, outlet holes 27a and 27b bored in the cleaner body 31 are, as shown in Fig. 4, disposed in an offset manner in the longitudinal direction of the cycle body.

The clean side 34 in the cleaner body 31 is divided, by a partition wall 28, into a clean chamber 29a in the portion where the outlet hole 27a is disposed and a clean chamber 29b in the portion where the outlet hole 27b is disposed. Each of the clean chambers 29a and 29b is disposed to each of the cylinders 15a and 15b of the engine 15, and is formed to have the same capacity for the purpose of making the air intake efficiency of the two cylinders 15a and 15b the same.

In this case, the shape of the cleaner body 31 in some cases is formed symmetric and in some cases the same is formed assymmetric for the purpose of preventing interference of the auxiliary machines such as the carburetors 19a and 19b and meeting a necessity arisen in a layout process in which, for example, an offset from the cycle body is intended. In any case, the partition wall 28 is formed so as to make the capacity of the two clean chambers 29a and 29b the same.

As described above, in the above-described embodiment, since the clean side 34 is divided into the clean chambers 29a and 29b having the same capacity by the partition wall 28 and each of the clean chamber 29a and 29b is respectively connected to each of the cylinders 15a and 15b, the interference between gases from each of the cylinders 15a and 15b can be prevented and the air intake performance of each of the cylinders 15a and 15b can be improved even if the air intake process of each of the cylinders 15a and 15b of the engine 15 overlaps in part. Therefore, air intake efficiency can be improved and the engine output can be improved.

In the above-described embodiment, although only the clean side 34 is divided by the partition wall 28, the dust side 33 may as well be divided by the partition wall 28. Furthermore, the partition wall 28 may be integrally formed with the cleaner body 31 or may be individually formed.

In the above-described embodiment, although the description is made on a case of two-cycle engine, the present invention can be similarly applied to multi-cylinder engines exceeding three or more cylinders. In the above-described embodiments, although the description is made on a case where each of the cylinders 15a and 15b is disposed at an angle of 90° to each other, the angle may be 60° or the other angles.

## Claims

1. An air intake system adapted for a motor cycle engine unit including a plurality of cylinders and an air cleaner (17) for removing a foreign material such as dust contained in an air intake, in which a plurality of intake tubes (18a,18b) are connected to the air cleaner for feeding clean air from the air cleaner and a plurality of carburetors (19a,19b) are connected to the intake tubes respectively in which the clean air is mixed with a fuel, said carburetors (19a,19b) being connected at angles different from each other with respect to a central axis of said air cleaner (17), the air fuel mixture being fed to the engine unit, the intake tubes (18a,18b) having lengths substantially equal to each other said carburetors (19a,19b) having substantially the same outer configuration and said air cleaner (17) being provided with an air cleaner body (13) which is divided into a dust side chamber (33) and a clean side chamber (34) by means of a filter (32), the air cleaner (17) being constructed to have a shape for absorbing the difference of the attachment angles of said carburetors (19a,19b) and characterised in that said clean side chamber (34) is divided into a plurality of clean side sections (29a,29b) by a partition member (28) so as to have inner volumes substantially equal to each other and said clean side sections (29a,29b) are connected respectively to corresponding cylinders (15a,15b) for the engine unit (15) through the intake tubes (18a,18b) and the carburetors (19a,19b).

2. The air intake system according to claim 1 wherein said clean side chamber (34) is divided into two clean side sections (29a, 29b) by means of a partition wall (28).

## Patentansprüche

1. Ein Lufteinlaßsystem, geeignet für eine Motorradmotoreinheit, umfassend eine Mehrzahl von Zylindern und einen Luftreiniger (17) zum Entfernen eines Fremd(körper)-Materials wie in einem Lufteinlaß befindlicher Staub, bei dem zum Zuführen von reiner Luft von dem Luftreiniger eine Mehrzahl von Einlasskanälen (18a,18b) mit dem Luftreiniger verbunden sind und eine Mehrzahl von Vergasern (19a,19b), in denen die reine Luft mit einem Kraftstoff vermischt wird, mit den Einlaßkanälen verbunden sind, wobei die Vergaser (19a,19b) unter voneinander unterschiedlichen Winkeln zu einer Mittelachse des Luftreinigers (17) verbunden sind, die Luft-Treibstoff-Mischung der Motoreinheit zugeführt wird, die Einlaßkanäle (18a,18b) im wesentlichen gleiche Längen aufweisen, die Vergaser (19a,19b) im wesentlichen dieselbe Außenkonfiguration besitzen, und der Luftreiniger (17) einen mittels eines Filters (32) in eine staubseitige Kammer (33) und eine reinseitige Kammer (34) geteilten Luftreinigerkörper (13) aufweist, wobei der Luftreiniger (17) so gestaltet ist, daß er eine Form zur Aufnahme des Unterschieds der Befestigungswinkel der Vergaser (19a,19b) besitzt, und dadurch gekennzeichnet ist, daß die reinseitige Kammer (34) durch ein Unterteilungselement (28) derart in eine Mehrzahl reinseitiger Abschnitte (29a,29b) unterteilt ist, daß diese im wesentlichen gleiche Innenvolumina besitzen, und daß die reinseitigen Abschnitte (29a,29b) über die Einlaßkanäle (18a,18b) und die Vergaser (19a,19b) jeweils mit den entsprechenden Zylindern (15a,15b) der Motoreinheit (15) verbunden sind.

2. Das Lufteinlaßsystem nach Anspruch 1, wobei die reinseitige Kammer (34) mittels einer Unterteilungswand (28) in zwei reinseitige Abschnitte (29a,29b) unterteilt ist.

## Revendications

1. Système d'admission d'air adapté pour un moteur de motocyclette comportant plusieurs cylindres et un filtre à air (17) pour enlever les matières étrangères telles que la poussière contenues dans l'air admis, système dans lequel plusieurs tubes d'admission (18a,18b) sont reliés au filtre à air pour amener de l'air propre depuis le filtre à air et dans lequel aux tubes d'admission sont respectivement reliés plusieurs carburateurs (19a,19b) dans lesquels l'air propre se mélange avec un carburant, lesdits carburateurs (19a,19b) étant reliés en faisant, avec l'axe central dudit filtre à air (17), des angles différents l'un de l'autre, le mélange air-carburant étant amené au moteur, les tubes d'admission (18a,18b) ayant, les uns et les autres, des longueurs sensiblement égales, lesdits carburateurs (19a,19b) ayant sensiblement la même configuration extérieure et ledit filtre à air (17) comportant un corps (13) de filtre à air qui est divisé en une chambre du côté sale (33) et une chambre du côté propre (34) au moyen d'un filtre (32), le filtre à air (17) étant construit de façon à avoir une forme qui absorbe la différence des angles de fixation desdits carburateurs (19a,19b), et caractérisé par le fait que ladite chambre du côté propre (34) est divisée en plusieurs sections du côté propre (29a,29b) par un élément formant cloison (28) de façon à avoir, les unes et les autres, des volumes intérieurs sensiblement égaux, et par le fait que lesdites sections du côté propre (29a,29b) sont reliées respectivement à des cylindres correspondants (15a,15b) du moteur (15) par l'intermédiaire des tubes d'admission (18a,18b) et des carburateurs (19a,19b).

2. Système d'admission selon la revendication 1, dans lequel ladite chambre du côté propre (34) est divisée en deux sections du côté propre (29a, 29b) au moyen d'une paroi formant cloison (28).
